# EUROPEAN PATENT SPECIFICATION

(11) **EP 2 725 519 B1**
(45) Date of publication and mention of the grant of the patent: **13.05.2015**
(21) Application number: 13192676.8
(22) Date of filing: 27.02.2012
(51) Int. Cl.: G06K 7/00, G06K 7/10

(54) **Apparatus and method for energizing a transceiver tag**
Vorrichtung und Verfahren zur Stromversorgung eines Sender-Empfängeretiketts
Appareil et procédé pour exciter une étiquette d'émetteur-récepteur

(43) Date of publication of application: 30.04.2014
(62) Divisional of application: 12708519.9
(73) Proprietor: Fraunhofer-Gesellschaft zur Förderung der angewandten Forschung e.V., 80686 München (DE)
(72) Inventor: Otto, Stephan, 90562 Heroldsberg (DE); Nowak, Thorsten, 90409 Nürnberg (DE); Mayordomo, Iker, 91058 Erlangen (DE)
(74) Representative: 2SPL Patentanwälte PartG mbB

(56) References cited:
- US-A1- 2009 021 351
- US-A1- 2009 195 358

## Description

### Background

Embodiments of the present invention relate to an apparatus and a method for determining location information indicative of a location of a transceiver tag and more particularly but not exclusively to locating RFID-tags within an area of interest.

Locating and tracking wireless transceivers or transceiver tags within an area of interest is of increasing interest for various applications. For that purpose, so-called Radio Frequency Identification (RFID) may be employed. RFID is a wireless non-contact system that uses radio-frequency electromagnetic fields to transfer data from an active or passive transceiver tag attached to an object, for the purposes of automatic identification and tracking. While an active tag has an on-board battery, a passive tag may be cheaper and smaller because it has no battery. Passive and active transceiver tags are operable to wirelessly transmit at least an identification signal when an energizing electromagnetic signal is present at the location of the transceiver tag. For example, luggage or personal items may receive active or passive RFID tags at airports in order to track or to identify the particular luggage along the path of a luggage transportation system of the airport which transports the luggage to the desired plane. To this end, RFID-readers are placed along the luggage path in order to direct the luggage into the right direction at the position of gates or the like. While the RFID-tags are brought to the position of the RFID-readers, the distance between the readers and the RFID-tags is relatively small.

However, other applications exist where the distance between a receiver of the RFID reader for receiving an identification signal from a transceiver tag may be greater and even limit the applicability of the RFID system, that is, particularly, the geographical area that can be covered by such a system. It may be desirable to utilize transceiver tags, as for example RFID-tags, already placed on goods or merchandise to gather information about the location of a particular item marked with a transceiver tag.

Transceiver tags utilize the energy of the energizing electromagnetic signal present at the location of the transceiver tag in order to transmit information or in order to power some internal logic circuitry of the transceiver tag. Such transceiver or RFID tags are operating with energizing electromagnetic signals at various different wavelengths, which may span the frequency spectrum from several KHz to several GHz. The particular technical implementations as to how to exchange information between a receiver or RFID reader receiving the signal from the transceiver tag and the transceiver tag differ to quite an extent. For example, some systems utilize load modulation in the transceiver tag in order to transmit information by modulating the load a transceiver tag is to the sender. Determining the alternating load at the sender side allows concluding about the transmitted information. So-called backscattering systems modulate the effective cross-section for backscattering the energizing electromagnetic signal as provided or emitted by a so-called energizer node. By modulating the effective cross-section the backscattered signal received by receive antennas is also modulated and thus information can be transmitted by the individual transceiver tags.

The systems utilizing such kind of transceiver tags to wirelessly transmit at least a unique identification signal associated to the transceiver tag may be implemented as active or passive systems. While all of the systems may utilize the power provided by the energizing electromagnetic signal to transmit the information from the transceiver tag to a receive antenna, the active systems may furthermore comprise a small battery or the like in order to additionally power a microprocessor or a similar device of the transceiver tag such as to be able to perform more complex computational operations. Simple passive tags, for example, do simply transmit a unique identification signal when the energizing electromagnetic signal for the transceiver tag is present at the location of the transceiver tag. A bit more sophisticated transceiver tags may furthermore be addressed individually by submitting a query information identifying a particular transceiver tag such that only the identified transceiver tag responds by transmitting its identification signal. Having associated such kind of transceiver tags with individual items or goods, the presence and/or location of the items within an area of interest may be determined.

It is important to note, however, that according to the requirement to energize the transceiver tags by an energizing electromagnetic signal, the geographical range of the system is limited. Sufficient power may only be transmitted via medium distances, as for example, within the range from 1 m to 10m, 20m or 25m. To the contrary, the signal sent out or backscattered by the transceiver tags may be detected over longer distances.

The US application 2009195358 proposes an RFID system including a pair of guide tracks located on opposite boundaries of at least one zone. A channel is movably attached to the guide tracks and is configured to move along the guide tracks through the at least one zone. A mobile RFID reader is movably attached to the channel and the mobile RFID reader is paused at a plurality of read points to scan for RFID tags located. The read points are determined by an arrangement of a plurality of hexagonal areas which are grouped together to create a combined area, where the combined area is aligned with the predefined area to define locations of the plurality of hexagonal areas, and where substantially central locations of each hexagonal area represent the plurality of read points.

The US application 2009021351 proposes an information collection system which can automatically calculate an operation or a travel path of a tag reader for collecting information of an RF tag. The information collection system of the present invention moves, in a movable area of a two-dimensional map, the tag reader along a surface of an object by referring to a three-dimensional map to emit radio waves while moving an information collection robot, records, upon reception of tag ID from the RF tag, a position of the information collection robot at the time as a data acquisition position, and calculates a path passing through data acquisition positions of all the recorded data as a moving sequence in a movable area of the information collection robot.

There exists a desire to provide a method or a system for determining location information on a location of a transceiver tag more efficiently.

### Summary

According to some embodiments, determining location information indicative of a location of a transceiver tag, which is operable to wirelessly transmit an identification signal when an energizing electromagnetic signal is present which energizes the transceiver tag, uses a mobile energizer node, which is movable so as to transmit the energizing electromagnetic signal into a vicinity of the transceiver tag. The mobile energizer node comprises a beam former operable to direct a maximum of a directivity pattern of the energizing electromagnetic signal to a desired solid angle, wherein the beam former is operable to rotate a direction of the maximum of the directivity pattern with a constant or with a variable angular velocity. The mobile energizer node is movable within the area of interest and may particularly be moved into the vicinity of the transceiver tag such that the transceiver tag is located within an energizing range of the mobile energizer node. While being located within the energizing range the transceiver tag may use the radio energy transmitted by the energizer node at least partly as an energy source. Energizing a transceiver tag by means of an embodiment of a mobile energizer node comprises: moving a mobile energizer node transmitting an energizing electromagnetic signal within at least an energizing range into a vicinity of the transceiver tag, such that the transceiver tag is located within the energizing range of the mobile energizer node. That is, a mobile energizer node may be utilized to provide energy to arbitrary types of transceiver tags. A transceiver tag may therefore also be understood as any arbitrary device receiving its energy from the energizing electromagnetic signal in terms of energy harvesting. In other words, according to further embodiments, a mobile energizer node may be used to provide energy for energy harvesting devices by radiating Radio Frequency (RF) energy to RF transceivers in its vicinity.

Transceiver tags may be understood to be transceivers utilizing only the energizing electromagnetic signal (electromagnetic field) or the power contained therein to transmit or to send information from the transceiver tag to a receive antenna. That is, the signal transmission may only be possible when the energizing electromagnetic signal is present at the position of the transceiver tag which is when the mobile energizer node is located in the vicinity of the transceiver tag. Consequently, a mobile energizer node may be understood as a sender transmitting the energizing electromagnetic signal with a frequency or another property enabling a transceiver tag to submit or to transmit information utilizing only the energizing electromagnetic signal or the energy contained therein. This also applies to active systems where an additional energy source or battery is contained within the tag to power a microprocessor or additional circuitry without delivering power for the transmission of signals or information.

Embodiments of the present invention may therefore serve to save a considerable amount of equipment and infrastructure as compared to systems providing the energizing electromagnetic signal for the transceiver tags within the complete area at any time. This is normally achieved by the distribution of large amounts of energizer nodes, that is, of equipment capable of transmitting the energizing electromagnetic signal throughout the complete area. This, in turn, requires excessive amounts of infrastructure and communication between the individual entities of the infrastructure, which also consumes large amounts of energy.

In other words, according to some embodiments of the invention, a smaller amount of mobile energizer nodes may be sufficient, the mobile energizer nodes moving inside an area of interest which contains numerous transceiver tags to be located such as to be able to provide energy to transceiver tags located in a vicinity to the mobile energizer node. That is to say, energy may be selectively provided for transceiver tags by using only one or only a few moving mobile energizer nodes instead of distributing numerous static energizer nodes within the area of interest. This may save a considerable amount of static energizer nodes and hence reduce the complexity of a wireless location system significantly.

Therefore, a method for determining the location information may comprise energizing a transceiver tag by a moving mobile energizer node, receiving the identification signal from a transceiver tag within the energizing range of the moving mobile energizer node and determining location information indicative of the location of the transceiver tag using a location of the mobile energizer node and/or a signal characteristic of the received identification signal. Some embodiments are applied to a RFID infrastructure using passive RFID tags. According to some embodiments, a mobile energizer node may comprise a transmitter operable to transmit an energizing electromagnetic signal for a transceiver tag as well as a mobility adapter for mounting the mobile energizer node on a movable device. That is to say, a mobile energizer node may comprise means to mount the mobile energizer node to any sort of moving transportation device. According to some embodiments, the mobility adapter may furthermore serve to provide supply voltage or energy and/or cabling for control information such as to switch on or off the mobile energizer node. According to some embodiments, a mobile energizer node may, therefore, be mounted or coupled to a moving device in order to be able to move around an area of interest, selectively energizing different subsets of transceiver tags distributed in the area of interest.

According to some embodiments, the mobile energizer node may be further utilized to transmit information to or to exchange information with the transceiver tags. To this end, further embodiments of mobile energizer nodes also comprise a wireless receiver interface operable to receive query information from a central processing or querying entity, the query identification identifying a particular transceiver tag. The mobile energizer node may transmit the query information via its transmitter to trigger the submission of the identification signal of the transceiver tag identified by the query information only. To this end, particular transceiver tags may be stimulated to transmit information such as to be able to identify their location or to determine location information indicative of only their location to avoid crosstalk or interference with messages of other transceiver tags. In other words, the mobile energizer node may also be regarded as a mobile RFID reader device, according to some embodiments.

According to some embodiments, the location or position information may be gathered utilizing a particular signal characteristic of the identification signal received by some receive antenna system which may or may not be coupled to the mobile energizer node. In particular, the received identification signal from the tag may be a modulated backscattered signal. The signal characteristic may comprise a signal frequency, a relative signal phase with respect to a reference phase condition, a signal direction, a signal strength, an error rate of data transmitted by or coded within the signal or the like.

According to further embodiments, the location or position information indicating the position of a transceiver tag may be obtained by combining data indicating a location of the mobile energizer node or of a mobile device used to move the energizer node with additional location information derived from the received identification signal of the tag. That is to say, in such embodiments the identification signal may deliver a location relative to the location of the mobile energizer node.

According to further embodiments, the precision of the location may be increased by further utilizing information about the location of the mobile energizer node. To this end, a further transceiver tag may be coupled to the mobile energizer node such that the position of the mobile energizer node can be located via the position of the associated further transceiver tag. The data indicating the location of the mobile energizer node may be determined based on odometric data, wherein odometry denotes the use of data associated to the drive mechanisms used to move the tracked device itself, that is to move the mobile energizer node of or the movable device. Examples for such kind of data are a step or wheel rotation count, movement sensors or the like to estimate a change in position of the device over time. Alternatively or supplementary, inertial navigational systems may be utilized to gather information on the location of the mobile energizer node. Inertial navigational systems may contain accelerometers, gyroscopes, or other motion-sensing devices. The inertial navigational system may initially be provided with its position and velocity from another source and thereafter compute its own updated position and velocity by integrating information received from the motion sensors. An Inertial navigational system may, therefore, require no external references in order to determine its position, orientation, or velocity once it has been initialized.

According to further embodiments, the precision of the locating may be further increased by utilizing analog or digital beam forming techniques for the energizing electromagnetic signal. To this end, the mobile energizer node may further comprise a beam former operable to direct a maximum, i.e. a main lobe, of a directivity pattern of the energizing electromagnetic signal to a desired solid angle. The location information for the transceiver tag may then be gathered from combined information about the directivity of the energizing electromagnetic signal, a characteristic of the received identification signal and/or knowledge on the position of the mobile energizer node. According to further embodiments, the beam former may be operable to rotate a direction of the maximum of the directivity pattern with a constant or with a variable angular velocity, for example in the horizontal plane. This may serve to preserve the number of transceiver tags to be located as compared to isotropic transmission of the energizing signal while increasing the accuracy by, for example, decreasing crosstalk or the like.

According to further embodiments employing two or more mobile energizer nodes with associated, i.e. interacting, beam formers, the maximum of the directivity pattern (i.e. the main lobe of a composite beam pattern) of the energizing electromagnetic signal of at least two of the beam formers may be rotated with a different angular velocity or according to a different variation scheme. Utilizing more beam forming mobile energizer nodes may increase the accuracy by exploiting the fact that responding transceiver tags, which have been energized by both mobile energizer nodes, must be located in an overlapping area of the directivity patterns of the energizing signals of both mobile energizer nodes. By making the directivity pattern rotate with different angular velocities, the overlapping area changes with time and the total number of transceiver tags located in the overlapping area - albeit at different time instances - may be increased and hence the efficiency of the system.

According to some embodiments, a method for determining location information of a transceiver tag may be implemented into a RFID system, also denoted as a wireless location system. Therefore a transmitter of a mobile energizer node may transmit an energizing electromagnetic signal having a frequency corresponding to a sending frequency of a Radio Frequency Identification (RFID) system, as for example 868 MHz, 915 MHz, 2.4 GHz, 2.5 GHz or 5.8 GHz.

Embodiments of wireless location systems for determining location information indicative of a location of at least one transceiver tag, therefore, comprise at least one mobile energizer node, at least one receiver operable to receive the identification signal from the transceiver tags, and at least one location evaluator for determining the location information using a location of the mobile energizer node and/or a signal characteristic of the received identification signal of at least one transceiver tag.

According to further embodiments, the wireless location system may further comprise a movement scheduler operable to determine a movement path for the movable device such as to utilize the existing infrastructure to the best. That is to say, the movement path indicates a desired movement of the movable device and thus the mobile energizer node within the tracking area, that is, within the area of interest.

According to some embodiments, the movement scheduler may determine the movement path such that the movable device stays for a longer time period in an area comprising a higher number of tags than in an area comprising a lower number of tags. This may serve to increase the reading or tracking efficiency in the areas having a higher number of transceiver tags. Those areas are energized for longer time periods such as to allow for a larger number of retransmissions or for larger communication time slots in those areas, such as to be able to derive a location information for all or nearly all transceiver tags present in the vicinity of the mobile energizer node even when the concentration of transceiver tags is high in that particular vicinity. To this end, the movement path may be determined such that the mobile device stops in areas with high numbers of transceiver tags or such that the movement velocity is decreased in those areas. Alternatively, the density of the tracks followed by the movable device in such areas may be increased, when it is, for example, hardly possible to decrease the velocity of the movable device any further. This may, for example, be the case, when the movable device is a flying device, such as a small helicopter or a drone, not capable of stopping completely.

According to some embodiments, the movable device is completely controlled or steered by the movement scheduler. The movement scheduler may hence be operable to communicate with and to control the movable device such that the movable device autonomously moves along the movement path determined by the movement scheduler.

According to further embodiments of the present invention, a wireless location system may furthermore comprise one or more infrastructure tags being operable to wirelessly transmit their identification signal when the energizing electromagnetic signal is present at their location, while the location of the infrastructure tags is predetermined and known to the system. Therefore, signal characteristics of the infrastructure tags distributed in the tracking area may be utilized to increase the precision of the position information for located transceiver tags even further when comparing the signal characteristics of the transceiver tags with those of the infrastructure tags placed at the known locations.

### Brief description of the Figures

Some embodiments of apparatuses and/or methods will be described in the following by way of example only, and with reference to the accompanying figures, in which
- Fig. 1: shows a schematic sketch of a wireless location system for determining location information indicative of a location of at least one transceiver tag;
- Fig. 2: shows a schematic sketch of a further embodiment of a wireless location system for determining location information indicative of a location of at least one transceiver tag;
- Fig. 3: shows a block diagram of an embodiment of a method for determining location information indicative of a location of a transceiver tag; and
- Fig. 4: schematically shows an embodiment of a mobile energizer node.

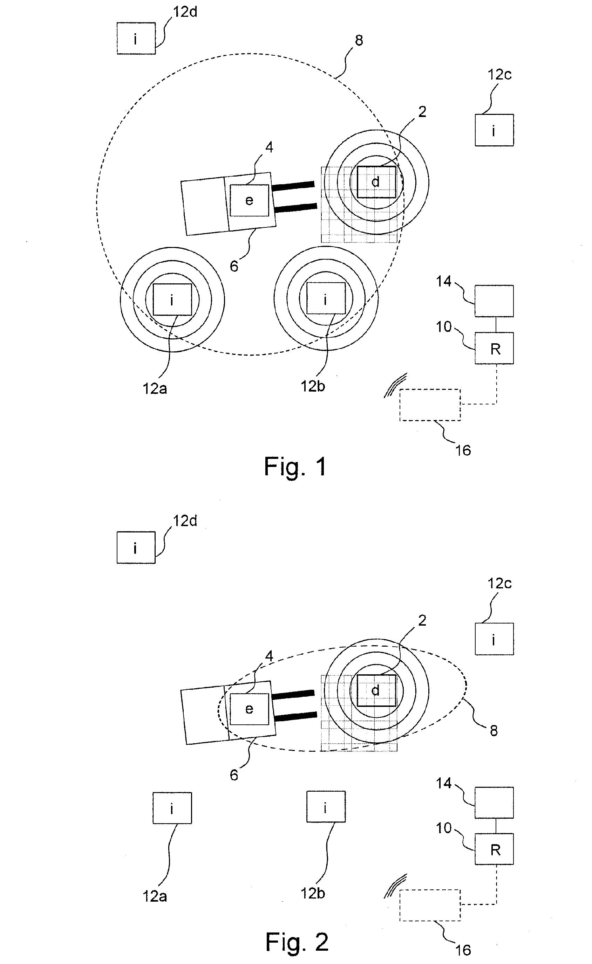

Fig. 1 shows a schematic sketch of a wireless system for energizing at least one transceiver tag 2. Additionally, the system may be used for determining location information indicative of a location of the at least one transceiver tag 2. In the particular embodiment shown in Fig. 1, an RFID-tag placed on merchandise stored on a pallet within a warehouse is illustrated as a (dynamically movable) transceiver tag 2 (d). Apart from the transceiver tag 2, Fig. 1 illustrates a mobile energizer node 4 (e) mounted on a fork truck or a fork lift, the fork truck or the fork lift being an example for any kind of a movable device 6, which may be installed on or within movable inventory management or facility management devices, for example. As indicated in Fig. 1, the mobile energizer node 4 transmits an energizing electromagnetic signal within at least an energizing range 8. Within the energizing range 8 the field strength or the energy transmitted by the energizing electromagnetic signal is big enough to bring any transceiver tag within the energizing range 8 into an operable state (illustrated by the circles surrounding the energized tags). The system illustrated in Fig. 1 further comprises at least one receiver 10 operable to receive an identification signal of the transceiver tag 2. The identification signal is transmitted by the transceiver tag 2 since the transceiver tag 2 is located within the energizing range 8 of the mobile energizer node 4 and thus enabled to transmit its identification signal.

For illustrative purposes only, Fig. 1 shows four optional infrastructure transceiver tags 12a to 12d (also denoted as "i") which are placed at known (reference) positions within the tracking area. As illustrated in Fig. 1, the moving mobile energizer node 4 transmitting the energizing electromagnetic signal within at least the energizing range 8 is moved into the vicinity of the transceiver tag 2. Once the transceiver tag 2 is located within the energizing range 8 of the mobile energizer node 4, it transmits its identification signal which, in turn, is received by the receiver 10. The receiver 10 has coupled thereto or implemented therein a location evaluator 14 for determining the location information of the transceiver tag 2 using a location of the mobile energizer node 4 and/or a signal characteristic of the received identification signal of the at least one transceiver tag 2. To this end, any signal characteristic of the received location information of the transceiver tag 2 may be used, such as for example, a frequency, a direction of origin, a signal strength or energy, a signal-to-noise ratio, a block error rate of information transmitted by or coded within the information location information or the like. To this end, the receiver 10 may also utilize a receive antenna array such as to implement receive beam-steering or the like. As already indicated above, the utilization of the energizing electromagnetic signal by the transceiver tag 2 may be based on any kind of coupling, such as for example, magnetic, capacitive or inductive coupling between the mobile energizer node 4 and the transceiver tag 2.

According to some embodiments, the receiver 10 and/or the associated location evaluator 14 may also utilize information on the position of the mobile energizer node 4 to further increase the accuracy of the localization. To this end, the mobile energizer node 4 may also have coupled thereto a further transceiver tag such as to localize also the further transceiver tag, which is, due to the mobile energizer node 4, permanently energized and therefore permanently traceable. Having also information on the position of the mobile energizer node 4, the accuracy of the positioning of the transceiver tag 2 may be further enhanced by combining the two pieces of position information. For example, the knowledge on the location of the transceiver tag 2 may be iteratively determined starting with the energizing range 8 roughly centered on the position of the mobile energizer node 4. Additional information may be derived from a signal characteristic of the identification signal received by the receiver 10, such as, for example, a field strength associated with the electromagnetic wave. Evaluating also this information yields a further possible area where the sending transceiver tag 2 may be placed. Merging this information may then serve to decrease the area where the sending transceiver tag 2 may be placed and thus increase the accuracy of the location information determined by the location evaluator 14.

While illustrated as being attached to a fork truck 6 in Fig.1 mobile energizer nodes 4 may be mounted on or attached to arbitrary movable devices according to further embodiments. According to further embodiments, the mobile energizer node may also be mounted to any other kind of movable device, such as for example, onto a crane, a truck, a carriage, a robot used to carry goods inside the tracking area, a flying device such as a drone or a remotely controlled helicopter, a service or utility robot or any other kind of utility machine. In this respect, a utility machine is to be understood as any kind of machine performing utility services such as for example hoovering, cleaning, wiping or the like. Attaching the mobile energizer nodes to moving devices which are also used to move around the goods, however, automatically provides for the energizing of the transceiver tags of particular interest. Since the transceiver tags are automatically activated when they are moved, the activation and hence the gathering of location information is automatically performed at the event of interest, that is, when the goods are moved and when their location changes which may require an update of a location database or the like.

By further utilizing the identification signal of infrastructure tags 12a and 12b which are also energized and therefore submit their associated identification signal, the accuracy of the positioning of the tracking of the transceiver tag 2 may be further increased. A signal characteristic of the identification signal of the transceiver tag 2 may be evaluated more precisely with the knowledge of the respective signal property of the infrastructure tags 12a and 12b being in a known spatial relation with respect to the receiver 10. Although only one single receiver 10 is shown in Fig. 1, further embodiments may utilize several receivers 10 such as to be able to receive signals from larger areas or to enhance positioning accuracy by, for example, applying receive beam-steering.

Additionally, information on the position of the mobile energizer node 4 itself may be used to increase the accuracy of the system. This may be achieved by additionally attaching a further transceiver tag thereto. Further embodiments may gather information on the position of the mobile transceiver tag 4 by tracking the mobile device having attached thereto the mobile transceiver tag 4, for example using GPS or other tracking systems which may already be present for tracking the mobile devices. This tracking may, for example, also be based on control data of an existing system used to automatically move robots or trucks within a warehouse.

In other words, Fig. 1 shows a system utilizing a method for determining location information indicative of a location of a transceiver tag 2 which, for example, allows an efficient locating of passive RFID-tags. Infrastructure and hence costs may be saved by utilizing mobile energizer nodes 4 which can be moved within a tracking area. To this end, the mobile energizer nodes 4 may be mounted or attached to ground transportation devices, movable machines, cranes, or the like. Mounting the mobile energizer nodes 4 on the devices used to move the goods having attached thereto the transceiver tags provides automatic energization and tracking of the transceiver tags of interest, that is, of the transceiver tags presently moved. This method or such a system only requires a small amount of infrastructure in the form of readers or receivers 10 and energizers, the so-called energizer nodes. The cost of installation, required hardware and maintenance may be decreased significantly and does furthermore not scale with the size of the tracking area. That is to say, large tracking areas can be energized or covered by a few mobile energizer nodes mounted, e.g. on mobile transportation devices or on any other kind of mobile devices.

As further illustrated in Fig. 1, the use of infrastructure tags 12a to 12d having predetermined and known positions may increase the accuracy of the determination of the transceiver tag 2 further. This may provide a further increase of the positioning accuracy without any significant additional costs, particularly in environments having inferior characteristics with respect to the propagation of electromagnetic waves.

By furthermore attaching a further transceiver tag to the mobile energizer node 4 the mobile energizer node 4 may be additionally localized using the same infrastructure. When the position of the mobile energizer node 4 itself is known, one may already conclude roughly about the position of the sending transceiver tags 2 since those need to be energized by the mobile energizer node and therefore be present within its energizing range 8.

The wireless localization system shown in Fig. 1 further illustrates an optional movement scheduler 16 operable to determine a movement path for the mobile device 6, that is, a movement path indicating a desirable movement of the mobile device 6 within the tracking area. To this end, the movement scheduler 16 may be utilized to provide a movement path for the mobile device 6 such that the efficiency of the system can be further increased.

To this end, the movement scheduler 16 may, for example, determine the movement path such that the mobile energizer node 4 is steered to positions where its presence is desired or needed. In particular, the movement path may be determined such that the mobile energizer node 4 is present for longer times in areas having a high number of transceiver tags while other areas having a lower number of tags may be excluded from the movement path or the velocity of the movable device may be increased while passing areas with comparatively few transceiver tags. According to some embodiments, the movement scheduler 16 may be operable to control an autonomously moving mobile device 6 in order to automatically follow the determined movement path. To this end, the movement scheduler 16 may, for example, comprise a wireless transmitter in order to transmit control information to a moving mobile device 6. Of course, that any other way of communicating a movement path is also feasible. For example, the determined movement path may be provided via a display to an operator on a fork truck such as to make the operator follow the movement path.

Fig. 2 illustrates a further embodiment of a wireless location system sharing most of the infrastructure with the system shown in Fig. 1. Therefore, only the difference with respect to Fig. 1 shall be shortly discussed in the following paragraph.

The mobile energizer node 4 of Fig. 2 furthermore implements beam-steering for the transmission of the energizing electromagnetic signal. To this end, the mobile energizer node 4 may comprise a beam former operable to direct a maximum of a directivity pattern of the energizing electromagnetic signal to a predetermined solid angle. For the particular implementation, any kind of beam-steering method may be used. For example, an antenna having an intrinsic directivity may be used to transmit the energizing electromagnetic signal. Furthermore, an antenna array having a variable directivity pattern may also be used. Utilizing such an antenna array, a directivity pattern may, for example, be rotated with respect to the mobile energizer node 4 such as to cover the same energizing range as illustrated in Fig. 8, albeit distributed over different time instances or time slots. As illustrated in Fig. 2, using beam steering may further increase the accuracy of the locating of the transceiver tag 2 since the area where the transceiver tag 2 can possibly be located is much smaller as compared to the embodiment of Fig. 1. This is due to the a priori knowledge of the directivity of the energizing electromagnetic signal transmitted by the moving mobile energizer node 4. As already indicated above, any possible type of beam-steering is possible to achieve this effect, as for example also mechanical beam-steering methods, implemented by a bezel rotating around an omnidirectional antenna.

In other words, utilizing the movement scheduler 16 may serve to make the mobile energizers follow some criteria when moving around the place. One possibility would be to implement static routes crossing the whole tracking area. A more sophisticated approach, however, may take into account the actual distribution of transceiver tags around the place to dynamically change the routes and in order to provide energy where it is indeed needed. Therefore, a movement scheduler 16 may be able to predict where it is most likely to find tags. Furthermore, the mobile energizer 14 may need to stay longer at places where the number of tags is high, than at places where the number of tags is lower. Such a strategy may improve the overall system performance as compared to a static approach. Furthermore, beam-forming may be utilized in order to increase the range of the mobile energizer mode 4 or to increase the accuracy of the positioning of the transceiver tag 2, since fewer transceiver tags are energized at a time.

When the angle or the orientation of the beam, that is, the directivity distribution of the energizing electromagnetic signal is known, a further increase of positioning accuracy may be achieved. Having a system comprising multiple mobile energizer nodes, each of them applying beam-forming with a rotating directivity pattern, the overall positioning accuracy may be further increased when the position of each of the mobile energizer nodes and its respective directivity pattern is known at a time. This may be utilized to calculate an overlapping area of the directivity patterns of each of the nodes such as to conclude on an a priori basis that the responding transceiver tags transmitting their identification signal when energized by each of the mobile energizer nodes must be placed in the overlapping area.

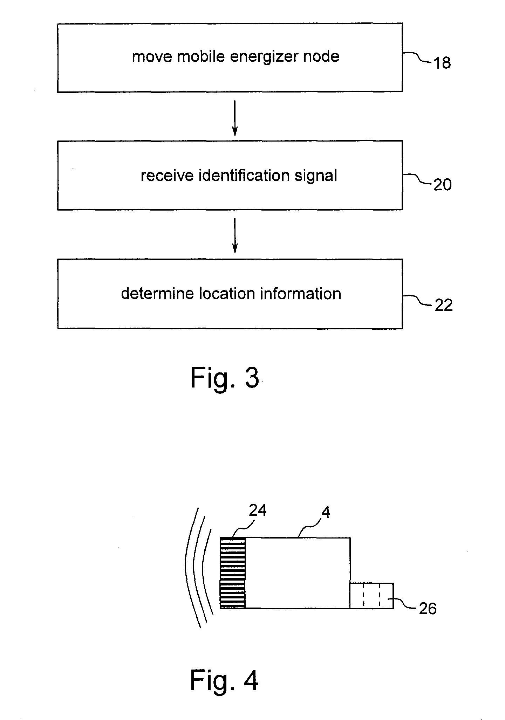

Fig. 3 shows a flow chart of an embodiment of a method for determining the location information indicative of a location of a transceiver tag. In a moving step 18 the mobile energizer node transmitting the energizing electromagnetic signal is moved into a vicinity of a transceiver tag such that the transceiver tag is located within an energizing range of the mobile energizer node. In a receiving step 20, the identification signal is received from the transceiver tag energized by the mobile energizer node.

In a determination step 22, location information indicative of the location of the transceiver tag is determined using a location of the mobile energizer node and/or a signal characteristic of the received identification signal.

Fig. 4 schematically illustrates a mobile energizer node 4, comprising a transmitter 24 operable to transmit an energizing electromagnetic signal for a receiver tag. The mobile energizer node 4 further comprises a mobility adapter 26 configured to mount the mobile energizer node 4 on a movable device such as onto the fork truck 6 illustrated in Fig. 1. As illustrated in Fig. 4, the mobility adapter 26 may, for example, be a bore, a hole or an especially-adapted thread to mount the mobile energizer node 4 to a movable device. According to further embodiments, the mobility adapter may furthermore comprise circuitry or connections to power the mobile energizer node 4 or to provide control signals to the mobile energizer node 4 such as to alter or change operation conditions of the mobile energizer node 4.

While the above embodiments have mainly been discussed with respect to the sending of energizing electromagnetic signals by the mobile energizer nodes, further embodiments may, of course, also implement mobile energizer nodes operable to exchange information with the transceiver tags. That is to say, mobile energizer nodes may further transmit information to and receive information from the transceiver tags in order to process the information or to forward the information to a further entity of the infrastructure. Moreover, the term identification signal is not to be understood as to describe a signal containing nothing more than a unique serial number or signal pattern. Of course, any other type of information, as for example the result of a query transmitted to and answered by an individual tag may be provided or used as an identification signal in order to conclude about the location of the transceiver tag sending the signal.

In summary, an embodiment of a wireless location system for determining location information indicative of a location of at least one transceiver tag of a plurality of transceiver tags distributed within a tracking area, the transceiver tags being operable to wirelessly transmit an identification signal when an energizing electromagnetic signal is present at the location of the transceiver tag, comprises at least one mobile energizer node mounted on a movable device. The mobile energizer node comprises a transmitter operable to transmit the energizing electromagnetic signal for the at least one transceiver tag and a beam former operable to direct a maximum of a directivity pattern of the energizing electromagnetic signal to a desired solid angle, wherein the beam former is operable to rotate a direction of the maximum of the directivity pattern with a constant or with a variable angular velocity. At least one receiver within the system is operable to receive the identification signal from the transceiver tags and at least one location evaluator is operable to determine the location information using a location of the mobile energizing node and/or a signal characteristic of the received identification signal of the at least one transceiver tag.

According to some embodiments, the wireless location is operable to determine location information for a passive RFID tag of a RFID system.

According to some embodiments, the movable device of the wireless location system is one of the group of a crane, a fork truck, a truck, a carriage, a drone, a vacuum cleaner, an autonomous robot or an utility machine.

## Claims

1. A mobile energizer node (4) comprising a transmitter (24) operable to transmit an energizing electromagnetic signal for a transceiver tag (2), the mobile energizer node (4) comprising:
a mobility adaptor (26) for mounting the mobile energizer (4) node on a movable device (6); and
a beam former operable to direct a maximum of a directivity pattern of the energizing electromagnetic signal to a desired solid angle, wherein the beam former is operable to rotate a direction of the maximum of the directivity pattern with a constant or with a variable angular velocity.

2. The mobile energizer node of claim 1, further comprising a movable device (6) coupled with the mobile energizer node (4) via the mobility adaptor (26), the movable device (6) being operable to move the mobile energizer node (4) in space.

3. The mobile energizer node (4) of claim 1 or 2, further comprising a wireless receiver interface operable to receive query information, the query information identifying a particular transceiver tag, wherein the transmitter (24) is further operable to transmit the query information to trigger the submission of the identification signal of the particular transceiver tag identified by the query information.

4. The mobile energizer node of claims 1 to 3, further comprising a further transceiver tag, the further transceiver tag being operable to wirelessly transmit an identification signal in the presence of an energizing electromagnetic signal, wherein the further transceiver tag is coupled to the mobile energizer node.

5. The mobile energizer node of claims 1 to 4, wherein the transmitter of the mobile energizer node (4) is operable to transmit an energizing electromagnetic signal having a frequency corresponding to a sending frequency of a Radio Frequency Identification (RFID) system.

6. The mobile energizer node of claims 1 to 5, having coupled thereto a positioning device operable to determine data indicating a location of the mobile energizer node.

7. The mobile energizer node of claim 6, wherein the data indicating the location of the mobile energizer node is based on odometric data and/or on information determined by an inertial navigational system.

8. Wireless location system comprising at least one mobile energizer node (4) according to any of claims 1 to 7 mounted on a movable device (6) for determining location information indicative of a location of at least one transceiver tag (2) of a plurality of transceiver tags distributed within a tracking area, the transceiver tags being operable to wirelessly transmit an identification signal when an energizing electromagnetic signal is present at the location of the transceiver tag, the location system further comprising:
at least one receiver (10) operable to receive the identification signal from the transceiver tags; and
at least one location evaluator (14) operable to determine the location information using a location of the mobile energizing node (4) and/or a signal characteristic of the received identification signal of the at least one transceiver tag (2).

9. The wireless location system of claim 8, further comprising a movement scheduler (16) operable to determine a movement path for the movable device (4), the movement path indicating a desired movement of the movable device (6) within the tracking area.

10. The wireless location system of claim 9, wherein the movement scheduler (10) is operable to determine the movement path such that the desired movement repeatedly follows a predetermined path.

11. The wireless location system of claim 9, wherein the movement scheduler (10) is operable to determine the movement path such that the movable device (6) stays for a longer time period in an area comprising a higher number of tags than in an area comprising a lower number of tags.

12. The wireless location system of claims 9 to 11, wherein the movement scheduler (6) is further operable to communicate with and to control the movable device (6) such that the movable device (6) autonomously moves along the movement path as determined by the movement scheduler (16).

13. The wireless location system of claims 8 to 12, further comprising one or more infrastructure transceiver tags (12a, 12d), an infrastructure transceiver tag being placed at a known position within the tracking area and operable to wirelessly transmit an identification signal when an energizing electromagnetic signal is present at the location of an infrastructure transceiver tag (2).

14. The wireless location system of claims 8 to 13, further comprising
a further mobile energizer node comprising a transmitter operable to transmit the energizing electromagnetic signal for the at least one transceiver tag (2), the further mobile energizer node being mounted on a further movable device and comprising a further beam former operable to direct a maximum of a directivity pattern of the energizing electromagnetic signal of the further mobile energizer node to a further desired solid angle, wherein
the beam former and the further beam former are operable to rotate a direction of the maximum of their respective directivity patterns with a different angular velocity or according to a different variation scheme.

15. A computer program for, when running on a computer, performing a method for energizing and/or determining location information indicative of a location of a transceiver tag (2), the transceiver tag (2) being operable to wirelessly transmit an identification signal when an energizing electromagnetic signal is present at the location of the transceiver tag (2), the method comprising:
controlling a movement of a mobile energizer node (4) according to any of claims 1 to 7,
the mobile energizer node (4) transmitting the energizing electromagnetic signal within at least an energizing range (8) into a vicinity of the transceiver tag (2), such that the transceiver tag (2) is located within the energizing range (8) of the mobile energizer node (4);
receiving the identification signal from the transceiver tag (2); and
determining location information indicative of the location of the transceiver tag (2) using a location of the mobile energizing node (4) and/or a signal characteristic of the received identification signal.

## Patentansprüche

1. Ein mobiler Energieversorgerknoten (40), der einen Sender (24) umfasst, der wirksam ist, um ein elektromagnetisches Energieversorgungssignal für ein Sendeempfängeretikett (2) zu übertragen, der mobile Energieversorgerknoten (4) umfassend:
einen Mobilitätsadapter (26) zum Befestigen des mobilen Energieversorgerknotens (4) an einem bewegbaren Bauelement (6); und
eine Strahlbildungseinrichtung, die wirksam ist, um ein Maximum einer Richtcharakteristik des elektromagnetischen Energieversorgungssignals auf einen gewünschten Raumwinkel zu richten, wobei die Strahlbildungseinrichtung wirksam ist, um eine Richtung der maximalen Richtcharakteristik mit einer konstanten oder mit einer variablen Winkelgeschwindigkeit zu drehen.

2. Der mobile Energieversorgerknoten gemäß Anspruch 1, ferner umfassend ein bewegbares Bauelement (6), das mit dem mobilen Energieversorgerknoten (4) über den Mobilitätsadapter (26) gekoppelt ist, wobei das bewegbare Bauelement (6) wirksam ist, um den mobilen Energieversorgerknoten (4) im Raum zu bewegen.

3. Der mobile Energieversorgerknoten (4) gemäß Anspruch 1 oder 2, ferner umfassend eine drahtlose Empfängerschnittstelle, die wirksam ist, um Abfrageinformationen zu empfangen, wobei die Abfrageinformationen ein bestimmtes Sendeempfängeretikett identifizieren, wobei der Sender (24) ferner wirksam ist, um die Abfrageinformationen zu übertragen, um die Übermittlung des Identifikationssignals des bestimmten Sendeempfängeretiketts auszulösen, das durch die Abfrageinformationen identifiziert wird.

4. Der mobile Energieversorgerknoten gemäß Anspruch 1-3, ferner umfassend ein weiteres Sendeempfängeretikett, wobei das weitere Sendeempfängeretikett wirksam ist, um drahtlos ein Identifikationssignal bei Vorhandensein eines elektromagnetischen Energieversorgungssignals zu übertragen, wobei das weitere Sendeempfängeretikett mit dem mobilen Energieversorgerknoten gekoppelt ist.

5. Der mobile Energieversorgerknoten gemäß Anspruch 1-4, wobei der Sender des mobilen Energieversorgerknotens (4) wirksam ist, um ein elektromagnetisches Energieversorgungssignal mit einer Frequenz zu übertragen, die einer Sendefrequenz eines Hochfrequenzidentifikationssystems (RFID-Systems) entspricht.

6. Der mobile Energieversorgerknoten gemäß Anspruch 1-5, der gekoppelt mit demselben ein Positionierungsbauelement aufweist, das wirksam ist, um Daten zu bestimmen, die einen Ort des mobilen Energieversorgerknotens anzeigen.

7. Der mobile Energieversorgerknoten gemäß Anspruch 6, wobei die Daten, die den Ort des mobilen Energieversorgerknotens anzeigen, auf odometrischen Daten und/oder auf Informationen basieren, die durch ein Trägheitsnavigationssystem bestimmt werden.

8. Drahtloses Ortungssystem, das zumindest einen mobilen Energieversorgerknoten (4) gemäß einem der Ansprüche 1-7 umfasst, der an einem bewegbaren Bauelement (6) befestigt ist, zum Bestimmen einer Ortsinformation, die einen Ort von zumindest einem Sendeempfängeretikett (2) einer Mehrzahl von Sendeempfängeretiketten anzeigt, die innerhalb eines Ortungsbereichs verteilt sind, wobei die Sendeempfängeretikette wirksam sind, um ein Identifikationssignal drahtlos zu übertragen, wenn ein elektromagnetisches Energieversorgungssignal an dem Ort des Sendeempfängeretiketts vorhanden ist, das Ortungssystem ferner umfassend:
zumindest einen Empfänger (10), der wirksam ist, um das Identifikationssignal von den Sendeempfängeretiketten zu empfangen; und
zumindest einen Ortsauswerter (14), der wirksam ist, um die Ortsinformation unter Verwendung eines Orts des mobilen Energieversorgungsknotens (4) und/oder einer Signalcharakteristik des empfangenen Identifikationssignals des zumindest einen Sendeempfängeretiketts (2) zu bestimmen.

9. Das drahtlose Ortungssystem gemäß Anspruch 8, das ferner einen Bewegungsplaner (16) aufweist, der wirksam ist, einen Bewegungsweg für das bewegbare Bauelement (4) zu bestimmen, wobei der Bewegungsweg eine gewünschte Bewegung des bewegbaren Bauelements (6) innerhalb des Ortungsbereichs angibt.

10. Das drahtlose Ortungssystem gemäß Anspruch 9, wobei der Bewegungsplaner (10) wirksam ist, den Bewegungsweg derart zu bestimmen, dass die gewünschte Bewegung wiederholt einem vorbestimmten Weg folgt.

11. Das drahtlose Ortungssystem gemäß Anspruch 9, wobei der Bewegungsplaner (10) wirksam ist, um den Bewegungsweg derart zu bestimmen, dass das bewegbare Bauelement (6) für eine längere Zeitperiode in einem Bereich bleibt, der eine höhere Anzahl von Etiketten aufweist, als in einem Bereich, der eine geringere Anzahl von Etiketten aufweist.

12. Das drahtlose Ortungssystem gemäß Anspruch 9-11, wobei der Bewegungsplaner (6) ferner wirksam ist, um mit dem bewegbaren Bauelement (6) zu kommunizieren und dies derart zu steuern, dass das bewegbare Bauelement (6) sich autonom entlang dem Bewegungsweg bewegt, wie durch den Bewegungsplaner (16) bestimmt wurde.

13. Das drahtlose Ortungssystem gemäß Anspruch 8-12, das ferner ein oder mehrere Infrastruktur-Sendeempfänger-Etiketten (12a, 12b) aufweist, wobei ein Infrastruktur-Sendeempfänger-Etikett an einer bekannten Position innerhalb des Nachführbereichs platziert ist und wirksam ist, um drahtlos ein Identifikationssignal zu übertragen, wenn ein elektromagnetisches Energieversorgungssignal an dem Ort eines Infrastruktur-Sendeempfänger-Etiketts (2) vorhanden ist.

14. Das drahtlose Ortungssystem gemäß Anspruch 8-13, ferner umfassend:
einen weiteren, mobilen Energieversorgerknoten, der einen Sender aufweist, der wirksam ist, das elektromagnetische Energieversorgungssignal für das zumindest eine Sendeempfängeretikett (2) zu übertragen, wobei der weitere, mobile Energieversorgerknoten an einem weiteren, bewegbaren Bauelement befestigt ist und eine weitere Strahlbildungseinrichtung aufweist, die wirksam ist, ein Maximum einer Richtcharakteristik des elektromagnetischen Energieversorgungssignals des weiteren, mobilen Energieversorgerknotens auf einen weiteren, gewünschten Raumwinkel zu richten,
wobei
die Strahlbildungseinrichtung und die weitere Strahlbildungseinrichtung wirksam sind, um eine Richtung des Maximums ihrer entsprechenden Richtcharakteristika mit einer unterschiedlichen Winkelgeschwindigkeit oder gemäß einem unterschiedlichen Variationsschema zu drehen.

15. Ein Computerprogramm zum Ausführen eines Verfahrens, wenn das Programm auf einem Computer läuft, zum Versorgen mit Energie und/oder Bestimmen von Ortsinformationen, die einen Ort eines Sendeempfängeretiketts (2) anzeigen, wobei das Sendeempfängeretikett (2) wirksam ist, um drahtlos ein Identifikationssignal zu übertragen, wenn ein elektromagnetisches Energieversorgungssignal an dem Ort des Sendeempfängeretiketts (2) vorhanden ist, das Verfahren umfassend:
Steuern einer Bewegung eines mobilen Energieversorgerknotens (4) gemäß Anspruch 1-7, wobei der mobile Energieversorgerknoten (4) das elektromagnetische Energieversorgungssignal innerhalb von zumindest einem Energieversorgungsbereich (8) in eine Nähe des Sendeempfängeretiketts (2) überträgt, derart, dass das Sendeempfängeretikett (2) innerhalb des Energieversorgungsbereichs (8) des mobilen Energieversorgerknotens (4) positioniert ist;
Empfangen des Identifikationssignals von dem Sendeempfängeretikett (2); und
Bestimmen von Ortsinformationen, die den Ort des Sendeempfängeretiketts (2) unter Verwendung eines Orts des mobilen Energieversorgungsknotens (4) und/oder einer Signalcharakteristik des empfangenen Identifikationssignals anzeigen.

## Revendications

1. Noeud d'excitation mobile (4) comprenant un émetteur (24) opérationnel pour transmettre un signal électromagnétique d'excitation pour une étiquette d'émetteur-récepteur (2), le noeud d'excitation mobile (4) comprenant:
un adaptateur de mobilité (26) permettant de monter le noeud d'excitateur mobile (4) sur un dispositif mobile (6); et
un formateur de faisceau opérationnel pour diriger un maximum de modèle de directivité du signal électromagnétique d'excitation vers un angle solide désiré, où le formateur de faisceau est opérationnel pour faire tourner une direction du maximum du modèle de directivité avec une constante ou avec une vitesse angulaire variable.

2. Noeud d'excitation mobile selon la revendication 1, comprenant en outre un dispositif mobile (6) couplé au noeud d'excitateur mobile (4) par le biais de l'adaptateur de mobilité (26), le dispositif mobile (6) étant opérationnel pour déplacer le noeud d'excitation mobile (4) dans l'espace.

3. Noeud d'excitation mobile (4) selon la revendication 1 ou 2, comprenant en outre une interface de récepteur sans fil opérationnelle pour recevoir les informations de requête, les informations de requête identifiant une étiquette d'émetteur-récepteur particulière, où l'émetteur (24) est en outre opérationnel pour transmettre les informations de requête pour déclencher la soumission du signal d'identification de l'étiquette d'émetteur-récepteur particulière identifiée par les informations de requête.

4. Noeud d'excitation mobile selon les revendications 1 à 3, comprenant en outre une étiquette d'émetteur-récepteur supplémentaire, l'étiquette d'émetteur-récepteur supplémentaire étant opérationnelle pour transmettre sans fil un signal d'identification en présence d'un signal électromagnétique d'excitation, où l'étiquette d'émetteur-récepteur supplémentaire est couplée au noeud d'excitation mobile.

5. Noeud d'excitation mobile selon les revendications 1 à 4, où l'émetteur du noeud d'excitation mobile (24) est opérationnel pour transmettre un signal électromagnétique d'excitation ayant une fréquence correspondant à une fréquence d'émission d'un système d'identification par fréquence radio (RFID).

6. Noeud d'excitation mobile selon les revendications 1 à 5, auquel est couplé un dispositif de positionnement opérationnel pour déterminer des données indiquant un emplacement du noeud d'excitation mobile.

7. Noeud d'excitation mobile selon la revendication 6, où les données indiquant l'emplacement du noeud d'excitation mobile sont fondées sur des données odométriques et/ou des informations déterminées par un système de navigation par inertie.

8. Système de localisation sans fil comprenant au moins un noeud d'excitation mobile (4) selon l'une quelconque des revendications 1 à 7, monté sur un dispositif mobile (6) permettant de déterminer des informations de localisation indiquant l'emplacement d'au moins une étiquette d'émetteur-récepteur (2) d'une pluralité d'étiquettes d'émetteur-récepteur réparties dans une zone de localisation, les étiquettes d'émetteur-récepteur étant opérationnelles pour transmettre sans fil un signal d'identification lorsqu'un signal électromagnétique d'excitation est présent au niveau de l'étiquette d'émetteur-récepteur, le système de localisation comprenant en outre:
au moins un récepteur (10) opérationnel pour recevoir le signal d'identification en provenance des étiquettes d'émetteur-récepteur; et
au moins un évaluateur d'emplacement (14) opérationnel pour déterminer les informations de localisation à l'aide de la localisation du noeud d'excitation mobile (4) et/ou un signal caractéristique du signal d'identification reçu de ladite au moins une étiquette d'émetteur-récepteur (2).

9. Système de localisation sans fil selon la revendication 8, comprenant en outre un planificateur de mouvement (16) opérationnel pour déterminer un itinéraire de mouvement pour le dispositif mobile (4), l'itinéraire de mouvement indiquant un mouvement désiré du dispositif mobile (6) à l'intérieur de la zone de localisation.

10. Système de localisation sans fil selon la revendication 9, où le planificateur de mouvement (10) est opérationnel pour déterminer l'itinéraire de mouvement de sorte que le mouvement désiré suit de façon répété un itinéraire prédéterminé.

11. Système de localisation sans fil selon la revendication 9, où le planificateur de mouvement (10) est opérationnel pour déterminer l'itinéraire de mouvement de telle sorte que le dispositif mobile (6) demeure plus longtemps dans une zone comprenant un nombre plus grand d'étiquettes que dans une zone comprenant un nombre réduit d'étiquettes.

12. Système de localisation sans fil selon les revendications 9 à 11, où le planificateur de mouvement (6) est en outre opérationnel pour communiquer et contrôler le dispositif mobile (6) de sorte que le dispositif mobile (6) se déplace de manière autonome le long de l'itinéraire de mouvement comme cela est déterminé par le planificateur de mouvement (16).

13. Système de localisation sans fil selon les revendications 8 à 12, comprenant en outre une ou plusieurs étiquettes d'émetteur-récepteur d'infrastructure (12a, 12d), une étiquette d'émetteur-récepteur d'infrastructure étant placée en une position connue à l'intérieur de la zone de localisation et opérationnelle pour transmettre sans fil un signal d'identification lorsqu'un signal électromagnétique d'excitation est présent à l'emplacement d'une étiquette d'émetteur-récepteur d'infrastructure (2).

14. Système de localisation sans fil selon les revendications 8 à 13, comprenant en outre un noeud d'excitation mobile supplémentaire comprenant un émetteur opérationnel pour transmettre le signal électromagnétique d'excitation pour ladite au moins une étiquette d'émetteur-récepteur (2), ledit noeud d'excitation mobile supplémentaire étant monté sur un dispositif mobile supplémentaire et comprenant un formateur de faisceau supplémentaire opérationnel pour diriger un maximum de modèle de directivité du signal électromagnétique d'excitation dudit noeud d'excitation mobile supplémentaire vers un angle solide désiré supplémentaire, où
le formateur de faisceau et le formateur de faisceau supplémentaire sont opérationnels pour faire tourner une direction du maximum de leurs modèles de directivité avec une vitesse angulaire différente ou selon un schéma de variation différent.

15. Programme informatique permettant, une fois exploité dans un ordinateur, de réaliser un procédé d'excitation et/ou de détermination des informations de localisation indiquant un emplacement d'une étiquette d'émetteur-récepteur (2), l'étiquette d'émetteur-récepteur (2) étant opérationnelle pour transmettre sans fil un signal d'identification lorsqu'un signal électromagnétique d'excitation est présent au niveau de l'étiquette d'émetteur-récepteur (2), le procédé consistant:
à contrôler le mouvement d'un noeud d'excitation mobile (4) selon l'une quelconque des revendications 1 à 7, le noeud d'excitation mobile (4) émettant le signal électromagnétique d'excitation à l'intérieur d'au moins une plage d'excitation (8) vers le voisinage de l'étiquette d'émetteur-récepteur (2), de sorte que l'étiquette d'émetteur-récepteur (2) est située dans la plage d'excitation (8) du noeud d'excitation mobile (4) ;
à recevoir le signal d'identification en provenance de l'étiquette d'émetteur-récepteur (2);
et
à déterminer les informations de localisation indiquant l'emplacement de l'étiquette d'émetteur-récepteur (2) à l'aide de la localisation du noeud d'excitation mobile (4) et/ou un signal caractéristique du signal d'identification reçu.
